# EUROPÄISCHE PATENTANMELDUNG

(11) **EP 4 083 527 A1**
(43) Veröffentlichungstag der Anmeldung: **02.11.2022**
(21) Anmeldenummer: 22169857.4
(22) Anmeldetag: 25.04.2022
(51) Int. Cl.: F24F 11/00, G01N 15/02, G08B 21/12, F24F 110/65, F24F 110/70, F24F 120/10, F24F 120/14, E06B 7/30

(54) **INFEKTIONSSCHUTZ-EMPFEHLUNGSGEBER FÜR EINEN GESCHLOSSENEN RAUM**

(30) Priorität: 26.04.2021 DE 102021110640
(71) Anmelder: Technische Universität Braunschweig, 38106 Braunschweig (DE)
(72) Erfinder: SCHILLING, Meinhard, 38302 Wolfenbüttel (DE); CIRIC, Dean, 38302 Wolfenbüttel (DE)
(74) Vertreter: Gramm, Lins & Partner Patent- und Rechtsanwälte PartGmbB

(57) **Zusammenfassung**

Die Erfindung betrifft einen Infektionsschutz-Empfehlungsgeber (12) für einen geschlossenen Raum, mit (a) einem Luftqualitätssensor (14) zum Messen zumindest eines Luftqualitätskennwerts (L), insbesondere einer CO₂-Konzentration, (b) einer Auswerteeinheit (18) und (c) einer Ausgabevorrichtung (22). Erfindungsgemäß vorgesehen ist (d) ein Mikrofon (16.2), wobei (e) die Auswerteeinheit (18) ausgebildet ist zum automatischen (i) Erfassen des Luftqualitätskennwerts (L), (ii) Bestimmen eines zeitabhängigen Geräuschpegelwerts (G), (iii) Berechnen eines Partikelkonzentration-Schätzwerts (P), der eine Partikelkonzentration (c_{P}) von Partikeln beschreibt, die von im Raum befindlichen Personen ausgeatmet wurden, und (iv) Ausgeben eines Signal mittels der Ausgabevorrichtung (22), das einen Lüft-Zeitpunkt, zu dem der Partikelkonzentrations-Schätzwert (P) einen vorgegebenen Partikelkonzentrations-Schwellenwert (P_{Schwelle}) erreicht, und/oder den Partikelkonzentrations-Schätzwert (P_{Schwelle}) kodiert.

## Beschreibung

Die Erfindung betrifft einen Infektionsschutz-Empfehlungsgeber für einen geschlossenen Raum, mit (a) einem Luftqualitätssensor zum Messen zumindest eines Luftqualitätskennwerts, insbesondere einer CO2-Konzentration, (b) einer Auswerteeinheit und (c) einer Ausgabevorrichtung. Derartige Infektionsschutz-Empfehlungsgeber sind als sogenannte Lüftungsampeln bekannt und zeigen, beispielsweise über ein optisches Signal, an, wenn die CO2-Konzentration der Luft oberhalb eines vorgegebenen Schwellenwertes liegt. Der Benutzer des Raumes weiß dann, dass es vorteilhaft wäre, den Raum zu lüften, beispielsweise um ein konzentriertes Arbeiten in diesem Raum zu gestatten. Der Infektionsschutz-Empfehlungsgeber ist insbesondere ausgebildet zum Ausgeben einer Lüftungs-Empfehlung und könnte daher auch als Lüftungs-Empfehlungsgeber bezeichnet werden.

Um das Risiko von Infektionskrankheiten zu minimieren, ist es vorteilhaft, die Raumluft mit Sensoren zu überwachen und je nach Messwerten der Sensoren mehr oder weniger stark zu filtern. Ein derartiges System ist aus der US 2021/0003310 A1 bekannt.

Alternativ ist bekannt, dass das Risiko von Infektionskrankheiten vermindert werden kann, wenn die Luft in einem Raum regelmäßig ausgetauscht wird. Es hat sich jedoch herausgestellt, dass das korrekte Lüften, um Infektionskrankheiten zu vermindern, schwieriger ist als angenommen. Ein Grund dafür ist, dass die Partikelkonzentration an Partikeln, die Keime enthalten können, zwar mit der CO2-Konzentration korreliert, es kann jedoch zu signifikanten Abweichungen kommen. Das ist besonders dann ein Problem, wenn die Partikelkonzentration deutlich höher ist als anhand der CO2-Konzentration zu erwarten ist. Auf diese Weise können bestehende Infektionsschutz-Empfehlungsgeber das Risiko einer Infektion in dem Raum, in dem sie angeordnet sind, unterschätzen und so zur Verbreitung von Infektionen beitragen.

Der Erfindung liegt die Aufgabe zugrunde, einen verbesserten Infektionsschutz-Empfehlungsgeber vorzuschlagen.

Die Erfindung löst das Problem durch einen gattungsgemäßen Infektionsschutz-Empfehlungsgeber, der ein Mikrofon aufweist und bei dem die Auswerteeinheit ausgebildet ist zum automatischen (i) Erfassen des Luftqualitätskennwerts, (ii) Bestimmen eines zeitabhängigen Geräuschpegelwerts, (iii) Berechnen eines Partikelkonzentrations-Schätzwerts, der eine Partikelkonzentration von Partikeln beschreibt, die von im Raum befindlichen Personen ausgeatmet wurden, und (iv) Ausgeben eines Signals, das einen Lüft-Zeitpunkt, zu dem der Partikelkonzentrations-Schätz-wert einen vorgegebenen Partikelkonzentrations-Schwellenwert erreicht, und/oder den Partikelkonzentrations-Schätzwert kodiert.

Vorteilhaft an dem erfindungsgemäßen Infektionsschutz-Empfehlungsgeber ist, dass in den meisten Fällen die Konzentration mit einer geringeren Unsicherheit geschätzt werden kann als bei bekannten Infektionsschutz-Empfehlungsgebern. Ein Grund dafür ist, dass ein hoher Geräuschpegelwert darauf hindeutet, dass die Personen im Raum lauter sprechen, singen oder andere Lautäußerungen von sich geben. Es hat sich herausgestellt, dass die Abgabe von keimbelasteten Aerosolen höher ist, wenn eine Person lauter spricht. Je höher daher der Geräuschpegel in einem Raum ist, desto schneller steigt in der Regel die Partikelkonzentration. Es ist dann sinnvoll, den Raum früher zu lüften, damit die Partikelkonzentration und damit das Infektionsrisiko nicht übermäßig steigen.

Vorteilhaft ist zudem, dass der Gewinn an Aussagekraft, mit der der Infektionsschutz-Empfehlungsgeber die Partikelkonzentration schätzen kann, mit geringem technischem Aufwand erreichbar ist. So ist es ausreichend, ein Mikrofon vorzusehen und die Auswerteeinheit so zu programmieren, dass sie die in Anspruch 1 genannten Schritte automatisch, das heißt ohne Eingriff eines Bedieners, durchführt.

Im Rahmen der vorliegenden Beschreibung wird unter dem Signal insbesondere ein vom Menschen wahrnehmbares, beispielsweise optisches, akustisches oder haptisches, Signal verstanden. Alternativ oder zusätzlich ist es möglich, dass ein elektronisches Signal ausgeben wird. Beispielsweise kann eine Nachricht per Funk, beispielsweise per Mobilfunk, oder per WLAN, an einen Zentralrechner oder einen Infektionsschutz-Empfehlungsgeber, der sich in der Nähe befindet, oder ein Mobiltelefon gesendet werden.

Insbesondere kann die Auswerteeinheit dazu ein Funkmodul aufweisen, das ausgebildet ist zum automatischen Kommunizieren mit zumindest einem anderen Infektionsschutz-Empfehlungsgeber, einem Zentralrechner und/oder zumindest einem Mobiltelefon. Es ist dann möglich, den Partikelkonzentration-Schätzwert zentral für mehrere Infektionsschutz-Empfehlungsgeber und damit mehrere Räume zentral zu erfassen und beispielsweise mit Krankheitsdaten abzugleichen.

Unter dem Bestimmen des zeitabhängigen Geräuschpegelwerts wird insbesondere verstanden, dass das vom Mikrofon aufgenommene, zeitabhängige Signal erfasst wird. Es ist aber auch möglich, dass aus dem vom Mikrofon aufgenommenen Signal direkt ein Kennwert berechnet und weiterverarbeitet wird.

Der Lüft-Zeitpunkt wird insbesondere dadurch bestimmt, dass die Zunahme der zeitabhängige Partikelkonzentration-Schätzwert extrapoliert wird und ermittelt wird, wann der Partikelkonzentration-Schätzwert den vorgegebenen Konzentrationen-Schwellenwert erreicht.

Unter einem Raum wird insbesondere ein geschlossener Bereich verstanden, beispielsweise in einem Gebäude oder einem Fahrzeug wie einem Auto, Laster, Bus oder einem öffentlichen Verkehrsmittel.

Gemäß einer bevorzugten Ausführungsform besitzt der Infektionsschutz-Empfehlungsgeber eine Eingabevorrichtung zum Eingeben von Eingabeparametern in Form von Raumparametern, die die Eigenschaften des Raumes, in dem der Infektionsschutz-Empfehlungsgeber steht, beschreiben. Ein Raumparameter beschreibt die - in der Regel unveränderlichen - Eigenschaften des Raumes. Beispiele für Raumparameter sind das Volumen des Raumes, die Fläche des Raumes, die Anzahl an Lüftungsöffnungen, der beim Lüften maximal mögliche Luftaustausch, die Position der Lüftungsöffnung, sowie die Stärke der Dämpfung von Schall.

Alternativ oder zusätzlich ist die Eingabevorrichtung ausgebildet zum Eingeben von Raumnutzungsparametern, die eine Art der Raumnutzung beschreiben. Beispiele für Raumnutzungsparameter sind die Anzahl der Personen, die sich im Raum befinden, das Alter der Personen, das durchschnittliche Gewicht der Personen, eine mittlere Aufenthaltsdauer der Personen im Raum und eine Stärke der körperlichen Bewegung, die die Personen im Raum voraussichtlich Durchführen werden.

Wiederum alternativ oder zusätzlich ist die die Eingabevorrichtung ausgebildet zum Eingeben von Umweltparametern, die einen Umweltzustand der Umwelt um den Raum kodieren. Beispiele für Umweltparameter sind die Feuchtigkeit, der Luftdruck und ein Geräuschpegel außerhalb des Raumes.

Die Auswerteeinheit ist ausgebildet zum automatischen Berechnen des Partikelkonzentration-Schätzwerts in Abhängigkeit von den Eingabeparametern. Bei der Eingabevorrichtung handelt es sich beispielsweise um eine Tastatur oder um Schalter, die mit dem Finger bedienbar sind. Es ist möglich, dass die Eingabevorrichtung direkt bedienbar ist, also einteilig mit dem Infektionsschutz-Empfehlungsgeber ausgebildet ist. Alternativ kann die Eingabevorrichtung auch an einem gesonderten Gerät ausgebildet sein, beispielsweise einem Mobiltelefon, wobei in diesem Fall die Übertragung der im Mobiltelefon eingehenden Parameter mittels des Funkmoduls des Infektionsschutz-Empfehlungsgebers erfolgt.

Vorzugsweise ist die Auswerteeinheit ausgebildet zum automatischen (i) Bestimmen von Raumgeräuschen, (ii) Berechnen zumindest eines Geräuschkennwerts aus den Raumgeräuschen und (iii) Berechnen des Partikelkonzentrations-Schätzwerts in Abhängigkeit vom Geräuschkennwert. Bei dem Geräuschkennwert kann es sich beispielsweise um den gemittelten Geräuschpegel, eine mittlere quadratische Abweichung vom gemittelten Geräuschpegel, eine Anzahl und/oder Dauer von Geräuschereignissen, die oberhalb eines vorgegebenen Lärmwerts liegen, und/oder die Anzahl an Ereignissen, die einem vordefinierten Geräuschereignis entsprechen, handeln. Dieses Geräuschereignis kann beispielsweise ein Niesen oder ein Husten sein.

Der Geräuschkennwert kann eine Größe enthalten oder ein Satz aus Größen sein. Beispielsweise umfasst der Geräuschkennwert eine zeitliche Häufigkeit von Husten- oder Niesereignissen, einem Geräuschspektrum der Raumgeräusche und/oder eine Personenzahl, die aus einer Sprachanalyse der Raumgeräusche abgeleitet ist.

Ein Niesereigniswird beispielsweise dadurch erfasst, dass die Auswerteeinheit kontinuierlich die Tonsignale vom Mikrofon mit Muster-Niesereignissen vergleicht. Alternativ oder zusätzlich kann auf der Auswerteeinheit eine künstliche Intelligenz installiert sein, die anhand von realen Niesereignissen trainiert wurde. Erfasst die künstliche Intelligenz ein Niesereignis in den kontinuierlich aufgenommenen Tonsignalen, so wird dies erfasst und die Frequenz an Niesereignissen und/oder die absolute Zahl der Niesereignisse seit dem letzten Lüften erfasst. Überschreitet die Anzahl an Niesereignissen seit dem letzten Lüften einen vorgegebenen Schwellenwert, wird ein Signal ausgeben, das angibt, dass gelüftet werden sollte.

Das Geräuschspektrum wird von der Auswerteeinheit vorzugsweise durch Fouriertransformation berechnet.

Vorzugsweise umfasst der Luftqualitätssensor ein CO2-Sensorelement zum Messen einer CO2-Konzentration, wobei die Auswerteeinheit ausgebildet ist zum Berechnen des Partikelkonzentration-Schätzwerts in Abhängigkeit von der CO2- Konzentration. Sowohl die CO2-Konzentration als auch die Partikelkonzentration steigt mit der Anzahl der Personen im Raum und der Zeit.

Alternativ oder zusätzlich umfasst der Luftqualitätssensor einen Partikelsensor zum Messen einer Partikelkonzentration und/oder einer Partikelgrößenverteilung, wobei die Auswerteeinheit ausgebildet ist zum Berechnen des Partikelkonzentration-Schätzwerts in Abhängigkeit von der Partikelkonzentration und/oder der Partikelgrößenverteilung.

Es ist möglich, dass der Partikelsensor als eigenständiges Gerät ausgebildet ist. Es ist dann in anderen Worten möglich, den Partikelsensor vom CO2-Sensorelement zu entfernen. Partikelsensoren sind häufig technisch aufwendige und damit kostenintensive Geräte. Es wäre daher günstig, wenn der Infektionsschutz-Empfehlungsgeber ständig einen Partikelsensor aufweisen würde, das ist aber nicht notwendig. Wenn - wie gemäß einer bevorzugten Ausführungsform vorgesehen - auf der Auswerteeinheit ein KI-System (KI = künstliche Intelligenz) läuft oder der Infektionsschutz-Empfehlungsgeber mit einem KI-System verbunden ist, das anhand der Luftqualitätskennwerte den Partikelkonzentrations-Schätzwert berechnet, kann der Partikelsensor nach einer Einlernzeit entfernt werden und das KI-System kann aus den Luftqualitätskennwerts auch ohne Messwert der Partikelkonzentration einen Partikelkonzentration-Schätzwert berechnen, der der tatsächlichen Partikelkonzentration hinreichend nahekommt.

Gemäß einer bevorzugten Ausführungsform umfasst der Luftqualitätssensor ein VOC-Sensorelement zum Messen einer Markersubstanz-Konzentration einer vorgegebenen Markersubstanz und die Auswerteeinheit ist ausgebildet zum Berechnen des Partikelkonzentrations-Schätzwerts in Abhängigkeit von der Markersubstanz-Konzentration. Bei dem VOC-Sensorelement kann es sich beispielsweise um ein lonenmobilitätsspektrometer oder ein Massenspektrometer handeln. Ionenmobilitätsspektrometer sind in der Lage, die Konzentration eines vorgegebenen Markersubstanz-Moleküls mit geringer Messunsicherheit auch dann zu messen, wenn das Markersubstanz-Molekül in einer sehr geringen Konzentration vorliegt.

Beispielweise kann die Markersubstanz eine Entzündung der Atemwege anzeigen. Es ist möglich, die Atemluft von kranken Personen und von nicht erkrankten Personen dazu zu benutzen, ein KI-System zu trainieren, sodass allein aus den Daten des VOC-Sensorelements, insbesondere des lonenmobilitätsspektrometers, auf die Gefährdung der im geschlossenen Raum anwesenden Personen für eine Infektion geschlossen werden kann.

Um die Luftqualität beispielsweise in Kellerräumen gut überwachen zu können, ist es vorteilhaft, wenn der Infektionsschutz-Empfehlungsgeber ein Radon-Sensorelement zum Messen einer Radonkonzentration aufweist und die Auswerteeinheit ausgebildet ist zum Berechnen des Partikelkonzentrations-Schätzwerts in Abhängigkeit von der Radonkonzentration.

Normalerweise ist zu erwarten, dass beim Lüften die Luftfeuchtigkeit im Raum absinkt, da Menschen beim Atmen Feuchtigkeit abgeben. Um die Effektivität des Lüftens zu beurteilen, kann es daher vorteilhaft sein, die Abnahme der Luftfeuchtigkeit als Maßstab zu nehmen. Vorzugsweise besitzt der Luftqualitätssensor daher ein Feuchte-Sensorelement zum Messen einer relativen Luftfeuchte im Raum und die Auswerteeinheit ist ausgebildet zum Berechnen des Partikelkonzentrations-Schätzwerts in Abhängigkeit von der Luftfeuchte.

Der Abfall der Luftfeuchtigkeit durch das Lüften hängt aber auch von der Feuchtigkeit in der Umgebung ab. Um den Fortschritt des Lüftens gut beurteilen zu können, ist es daher vorteilhaft, wenn der Luftqualitätssensor zudem einen Außen-Luftfeuchtigkeitssensor zum Messen einer Luftfeuchtigkeit in der Umgebung des Raumes aufweist.

In Fitnesscentern atmen Personen häufig besonders tief. Je stärker die körperliche Anstrengung ist, desto tiefer wird ein-und ausgeatmet. Die Atemintensität hängt von der Leistung ab, die von dem Benutzer des Fitnessgeräts abgegeben wird. Günstig ist es daher, wenn der Luftqualitätssensor ein Aktivitäts-Sensorelement zum Messen einer Leistung, die an einem Fitnessgerät von einem Benutzer abgegeben wird, aufweist und die Auswerteeinheit ausgebildet ist zum Berechnen des Partikelkonzentrations-Schätzwerts in Abhängigkeit von der Leistung.

Günstig ist es, wenn der Infektionsschutz-Empfehlungsgeber eine Kamera aufweist und die Auswerteeinheit mit der Kammer verbunden ist und ausgebildet ist zum automatischen Erkennen einer Personenanzahl an Personen im Raum mittels Bilderkennung und zum Berechnen des Partikelkontraktion-Schätzwerts in Abhängigkeit von der Personenanzahl. Es gehört zum Stand der Technik, aus Bildern die Anzahl der Personen zu bestimmen, daher wird hier nicht näher darauf eingegangen. Je höher die Zahl der Personen in einem Raum ist, desto höher ist die Möglichkeit, dass eine der Personen infiziert ist. Es ist daher vorteilhaft, den Luft-Zeitpunkt umso früher zu wählen, je größer die Zahl der Personen im Raum ist.

Bei der Kamera handelt es sich vorzugsweise um eine Infrarot-Kamera. Auf diese Weise können Personen besonders einfach gezählt werden. Zudem entstehen kaum Probleme mit dem Datenschutz, da Personen anhand ihres Wärmebilds in der Regel nicht identifiziert werden können.

Erfindungsgemäßen ist zudem eine Luftqualitäts-Sicherungsanlage mit (a) zumindest einem Infektionsschutz-Empfehlungsgeber, (b) zumindest einem Lüftungsaktor, mittels dem eine Luftzufuhr, insbesondere eine Frischluftzufuhr, zum Raum vergrößerbar ist, wobei (c) die Auswerteeinheit ausgebildet ist zum automatischen Betätigen des Lüftungsaktors, wenn der Partikelkonzentrations-Schwellenwert überschritten wird. Beispielsweise ist der Lüftungsaktor mittels einer Funkverbindung an steuerbar. In andern Worten kann der Lüftungsaktor in einem anderen Objekt angeordnet sein als der Luftqualitätssensor, sodass der Lüftungsaktor unabhängig vom Luftqualitätssensor bewegbar ist. Der Lüftungsaktor kann beispielsweise mit einem Fenster verbunden zum Öffnen verbunden sein und dieses automatisch öffnen.

Erfindungsgemäß ist zudem eine Luftqualitäts-Sicherungsanlage mit (a) einer Mehrzahl an Infektionsschutz-Empfehlungsgebern, die jeweils eine Kommunikationseinheit haben, (b) einem Zentralrechner, der ausgebildet ist zum automatischen Erfassen von Messdaten von den Infektionsschutz-Empfehlungsgebern, Berechnen, insbesondere mittels künstlicher Intelligenz, einer Funktion, die den erfassten Kennwerten den Partikelkonzentrations-Schätzwert zuordnet. Auf diese Weise ist es möglich, für jeden Raum eine besonders gut geeignete Strategie zum Lüften zu berechnen.

Um den Erfolg einer veränderten Strategie des Lüftens abschätzen zu können, ist es günstig, wenn der Zentralrechner ausgebildet ist zum automatischen (a) Erfassen von Krankheits- oder Leistungsdaten von Personen, die sich in einem mit einem Infektionsschutz-Empfehlungsgeber ausgestatteten Raum befunden haben und (b) Berechnen der Funktion anhand der Krankheits- oder Leistungsdaten.

Erfindungsgemäß ist zudem ein Verfahren zum Betreiben eines Infektionsschutz-Empfehlungsgebers mit den Schritten (i) Erfassen eines Luftqualitätskennwerts, insbesondere einer CO2-Konzentration, von einem Luftqualitätssensor des Infektionsschutz-Empfehlungsgebers, (ii) Bestimmen eines zeitabhängigen Geräuschpegelwerts von einem Mikrofon des Infektionsschutz-Empfehlungsgebers, (iii) Berechnen eines Partikelkonzentrations-Schätzwerts, der eine Partikel-konzentration von Partikeln beschreibt, die von im Raum befindlichen Personen ausgeatmet wurden, und (iv) Ausgeben eines Signals, das einen Lüft-Zeitpunkt, zu dem der Partikelkonzentrations-Schätzwert einen vorgegebenen Partikelkonzentrations-Schwellenwert erreicht, und/oder den Partikelkonzentrations-Schätzwert kodiert. Vorzugsweise umfasst das Verfahren die Schritte, die oben als diejenigen Schritte beschrieben sind, die die Auswerteeinheit vorzugsweise durchführt.

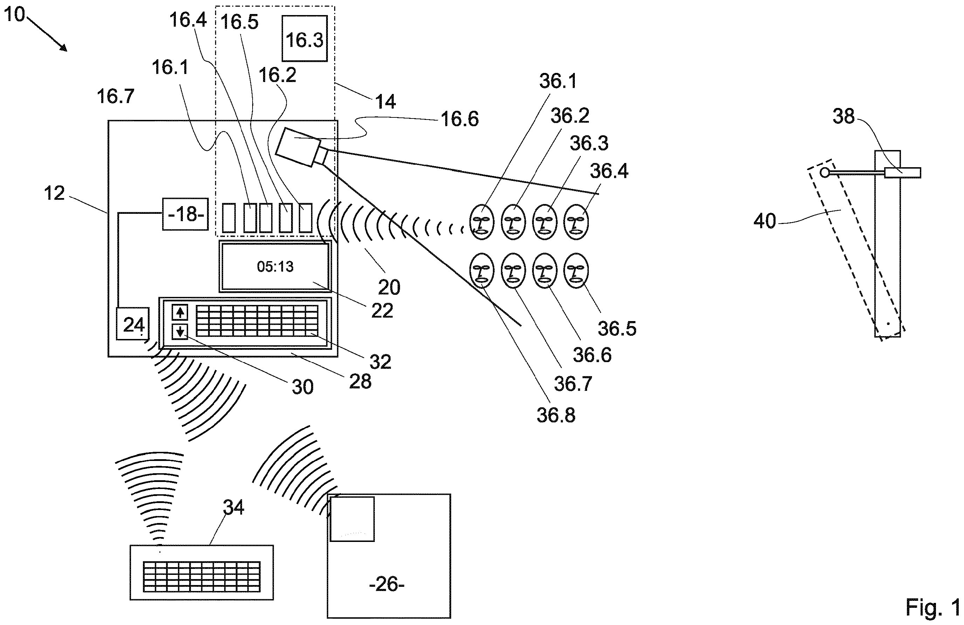

Im Folgenden wird die Erfindung anhand der beigefügten Zeichnung näher erläutert. Dabei zeigt
- Figur 1: ein Schema einer erfindungsgemäßen Luftqualitäts-Sicherungsanlage mit einem erfindungsgemäßen Infektionsschutz-Empfehlungsgeber.

Figur 1 zeigt eine erfindungsgemäße Luftqualität-Sicherungsanlage 10 mit einem erfindungsgemäßen Infektionsschutz-Empfehlungsgeber 12, der einen Luftqualitätssensor 14 besitzt. Der Luftqualitätssensor 14 besitzt ein CO2-Sensorelement 16.1 zum Messen eines Luftqualitätskennwerts L in Form einer CO2-Konzentration c_{CO2}. Der Messwert für die CO2-Konzentration c_{CO2} wird an eine Auswerteeinheit 18 übermittelt.

Der Luftqualitätssensor 14 besitzt zudem ein Mikrofon 16.2, mittels dem Geräusche 20, die in Abhängigkeit von einer Zeit t erfasst werden, in ein elektrisches Signal umgewandelt werden, das ebenfalls an die Auswerteeinheit 18 übermittelt wird. Die Auswerteeinheit 18 erfasst das Signal vom Mikrofon 16.2 und berechnet daraus einen zeitabhängigen Geräuschpegelwert G: Beispielsweise ist der Geräuschpegelwert G der Schalldruckpegel Lₚ. In der Auswerteeinheit 18 wird ein Programm ausgeführt, dass aus der CO2-Konzentration c_{CO2} und dem Geräuschpegelwert G einen Partikelkonzentrations-Schätzwert P berechnet.

Alternativ ist es möglich, dass der Infektionsschutz-Empfehlungsgeber 12 mittels eines Funkmoduls 24 mit einem Zentralrechner 26 in Verbindung steht. Der Infektionsschutz-Empfehlungsgeber 12 übermittelt die gemessenen Luftqualitätskennwerte und Geräuschpegelwerte an den Zentralrechner 26, der daraus den Partikelkonzentration-Schätzwert P bestimmt. Auch dieses ausgelagerte Berechnen des Partikelkonzentrations-Schätzwerts P wird als ein Berechnen mittels der Auswerteeinheit 18 angesehen.

Der Partikelkonzentration-Schätzwert P ist ein Wert, der angibt, wie hoch die Konzentration an solchen Partikel ist, die potenziell als Träger für eine Atemwegsinfektion beim Menschen in Betracht kommen. Der Partikelkonzentration-Schätzwert P(t) wird in Abhängigkeit von der Zeit t berechnet. Aus dem zeitlichen Verlauf des Partikelkonzentration-Schätzwerts P(t) wird der zukünftige Verlauf des Partikelkonzentration-Schätzwerts P(t) extrapoliert und ermittelt, wann dieser zukünftige Verlauf einen Partikel-konzentration-Schwellenwert P_{Schwelle} erreicht. Dieser Lüft-Zeitpunkt T_{warn} wird mittels einer Ausgabevorrichtung 22 ausgegeben.

Alternativ oder zusätzlich ist es möglich, dass die Zeit bis zum Erreichen des Lüft-Zeitpunkts T_{warn} angezeigt wird. Das kann entweder mittels einer Anzeige erfolgen, die diese Zeit explizit angibt. Alternativ oder zusätzlich kann die Zeit bis zum Lüft-Zeitpunkt T_{warn} farbkodiert oder analog, beispielsweise mittels eines analogen Anzeigers, angezeigt werden.

Wiederum alternativ oder zusätzlich kann der Partikelkonzentration-Schätzwert als Zahl, farbcodiert oder analog mittels eines Anzeigers ausgegeben werden.

Der Infektionsschutz-Empfehlungsgeber 12 besitzt eine Eingabevorrichtung 28, die beispielsweise Eingabetasten 30.1, 30.2 zum Vergrößern oder Verkleinern eines Wertes oder eine Tastatur 32 aufweisen kann. Mittels der Eingabevorrichtung 28 können Eingabeparameter E in Form von, wie oben beschrieben, Raumparametern p_{R}, oder Raumnutzungsparametern p_{N} eingegeben werden. Es ist zudem möglich, dass die Eingabevorrichtung an einem Mobiltelefon 34 ausgebildet ist.

Der Infektionsschutz-Empfehlungsgeber 12 kann zudem einen Partikelsensor 16.3 zum Messen einer Partikelkonzentration c_{P} und/oder einer Partikelgrößenverteilung, ein Radon-Sensorelement 16.4 zum Messen einer Radonkonzentration c_{R} und ein Feuchte-Sensorelement 16.5 zum Messen einer relativen Luftfeuchte F aufweisen.

Der Infektionsschutz-Empfehlungsgeber 12 kann zudem ein VOC-Sensorelement 16.7 aufweisen, insbesondere in Form eines lonenmobilitätsspektrometers. Das lonenmobilitätsspektrometer ist ausgebildet zum Messen einer Markersubstanz-Konzentration c_{M} einer vorgegebenen Markersubstanz, die charakteristisch in der Atemluft von Personen mit einer Atemwegserkrankung ist. Diese Markersubstanz muss nicht explizit bekannt sein, es ist möglich, einem KI-System für eine Vielzahl von Personen einerseits die vom VOC-Sensorelements 16.7 gemessenen Daten und andererseits den Status, ob eine Atemwegserkrankung vorliegt oder nicht, einzugeben und so das KI-System darauf zu trainieren, ein Muster in den gemessenen Daten zu erkennen, um zumindest die Aussage treffen zu können, ob die Wahrscheinlichkeit höher oder geringer als eine durchschnittliche Wahrscheinlichkeit ist, das Luft im Raum, in dem der Infektionsschutz-Empfehlungsgeber 12 steht, eine Infektionsgefahr darstellt.

Günstig ist es zudem, wenn der Infektionsschutz-Empfehlungsgeber 12 eine Kamera 16.6 aufweist. Mittels eines Bilderkennungsverfahrens, das beispielsweise auf der Auswerteeinheit 18 läuft oder auf einem Prozessor der Kamera 16.6 selbst, wird eine Anzahl A an Personen 36.j (j = 1, 2, ..., A) bestimmt, die sich im überwachten Raum befinden.

Die Auswerteeinheit 18 erfasst die Parameter p_{R}, p_{N} und berechnet unter deren Berücksichtigung den Luft-Zeitpunkt T_{warn} und/oder den Partikelkonzentrations-Schätzwert P.

Alternativ oder zusätzlich erfasst die Auswerteeinheit 18 aus den vom Mikrofon 16.2 erfassten Mikrofondaten eine Anzahl an Niesereignissen oder Hustenereignissen. Das erfolgt beispielsweise über einen kontinuierlichen Mustervergleich mit in der Auswerteeinheit 18 gespeicherten Mustern, die ein Niesereignis beziehungsweise ein Hustenereignis beschreiben. Je größer die Anzahl an Niesereignissen und/oder Hustenereignissen ist, desto kleiner ist der zeitliche Abstand zum Lüft-Zeitpunkt.

Die Auswerteeinheit 18 oder der Zentralrechner 26 erfassen zudem vorzugsweise Krankheits- oder Leistungsdaten der Personen 36.j.

Aus den Messdaten der Sensoren 16.i (i = 1, 2, ..., N; N: Zahl der Sensoren) und gegebenenfalls den Krankheits- oder Leistungsdaten ermittelt die Auswerteeinheit 18 oder der Zentralrechner 26 mittels eines KI-Systems den Luft-Zeitpunkt Twarn. Dazu wird eine Zielfunktion Z verwendet. Das KI-System verändert den Luft-Zeitpunkt bei gegebenen Messdaten der Sensoren so, dass die Zielfunktion Z optimiert wird.

Das KI-System optimiert den Lüft-Zeitpunkt, um die Zielfunktion Z zu minimieren. Beispielsweise enthält die Zielfunktion Z die Zahl der Krankheiten und/oder die Leistung der Personen im Raum. Die Zielfunktion Z kann beispielsweise auch den, gegebenenfalls über einen vorgegebenen Zeitraum gemittelten, Geräuschpegelwerts G, der möglichst klein sein soll und/oder die Zeit zwischen zwei Lüftungsvorgängen, die möglichst lang sein soll, enthalten.

Die Luftqualitäts-Sicherungsanlage 10 umfasst zudem einen Lüftungsaktor 38, mittels dem ein Fenster 40 geöffnet und geschlossen werden kann. Der Lüftungsaktor 38 steht, beispielsweise mittels einer Funkverbindung in Verbindung mit der Auswerteeinheit 18. Wird der Luft-Zeitpunkt T_{warn} erreicht, so kann, sofern die Auswerteeinheit 18 entsprechend programmiert ist, automatisch der Lüftungsaktor 38 aktiviert werden, sodass dieser das Fenster 40 öffnet.

Berechnet die Auswerteeinheit 18 aus den Messdaten, dass der Partikelkonzentrations-Schätzwert P hinreichend weit unter dem Partikelkonzentrations-Schwellenwert P_{Schwelle} liegt und/oder wenn eine maximale Lüftungszeit Tmax überschritten ist, steuert die Auswerteeinheit 18 den Lüftungsaktor 38 so an, dass er das Fenster 40 schließt.

Die Luftqualität-Sicherungsanlage 10 kann zudem eine Mehrzahl an Infektionsschutz-Empfehlungsgebern 12 aufweisen, die jeweils in unterschiedlichen Räumen angeordnet sind.

**Bezugszeichenliste**

| | | | |
|---|---|---|---|
| 10 | Luftqualität-Sicherungsanlage | N | Zahl der Sensoren |
| 12 | Infektionsschutz-Empfehlungsgeber | L | Luftqualitätskennwert |
| 14 | Luftqualitätssensor | G | Geräuschpegelwert |
| 16.1 | CO2-Sensorelement | L_{P} | Schalldruckpegel |
| 16.2 | Mikrofon | p_{R} | Raumparameter |
| 16.3 | Partikelsensor | p_{N} | Raumnutzungsparameter |
| 16.4 | Radon-Sensorelement | P | Partikelkonzentrations-Schätzwert |
| 16.5 | Feuchte-Sensorelement | P_{Schwelle} | Partikelkonzentration-Schwellenwert |
| 16.6 | Kamera | T_{warn} | Luft-Zeitpunkt |
| 16.7 | VOC-Sensorelement | Tmax | maximale Lüftungszeit |
| 18 | Auswerteeinheit | t | Zeit |
| 20 | Geräusch | Z | Zielfunktion |
| 22 | Ausgabevorrichtung | | |
| 24 | Funkmodul | | |
| 26 | Zentralrechner | | |
| 28 | Eingabevorrichtung | | |
| 30 | Eingabetaste | | |
| 32 | Tastatur | | |
| 34 | Mobiltelefon | | |
| 36 | Person | | |
| 38 | Lüftungsaktor | | |
| 40 | Fenster | | |
| A | Anzahl an Personen | | |
| c_{CO2} | CO2-Konzentration | | |
| c_{M} | Markersubstanz-Konzentration | | |
| c_{P} | Partikelkonzentration | | |
| c_{R} | Radonkonzentration | | |
| E | Eingabeparameter | | |
| i | Laufindex | | |
| j | Laufindex | | |

## Patentansprüche

1. Infektionsschutz-Empfehlungsgeber (12) für einen geschlossenen Raum, mit
(a) einem Luftqualitätssensor (14) zum Messen zumindest eines Luftqualitätskennwerts (L), insbesondere einer CO2-Konzentration,
(b) einer Auswerteeinheit (18) und
(c) einer Ausgabevorrichtung (22),
**gekennzeichnet durch**
(d) ein Mikrofon (16.2),
(e) wobei die Auswerteeinheit (18) ausgebildet ist zum automatischen
(i) Erfassen des Luftqualitätskennwerts (L),
(ii) Bestimmen eines zeitabhängigen Geräuschpegelwerts (G),
(iii) Berechnen eines Partikelkonzentration-Schätzwerts (P), der eine Partikelkonzentration (c_{P}) von Partikeln beschreibt, die von im Raum befindlichen Personen ausgeatmet wurden, und
(iv) Ausgeben eines Signal mittels der Ausgabevorrichtung (22), das einen Lüft-Zeitpunkt, zu dem der Partikelkonzentrations-Schätzwert (P) einen vorgegebenen Partikelkonzentrations-Schwellenwert (P_{Schwelle}) erreicht.

2. Infektionsschutz-Empfehlungsgeber (12) nach Anspruch 1, **gekennzeichnet durch**
(a) eine Eingabevorrichtung (28) zum Eingeben von Eingabeparametern in Form von
(i) Raumparametern, die Eigenschaften des Raumes, in dem der Infektionsschutz-Empfehlungsgeber (12) steht, beschreiben und/oder
(ii) Raumnutzungsparametern, die eine Art der Raumnutzung beschreiben,
(b) wobei die Auswerteeinheit (18) ausgebildet ist zum automatischen Berechnen des Partikelkonzentrations-Schätzwerts (P) in Abhängigkeit von den Eingabeparametern.

3. Infektionsschutz-Empfehlungsgeber (12) nach einem der vorstehenden Ansprüche, **dadurch gekennzeichnet, dass** die Auswerteeinheit (18) ausgebildet ist zum automatischen
(i) Bestimmen von Raumgeräuschen (20),
(ii) Berechnen zumindest eines Geräuschkennwerts (G) aus den Raumgeräuschen (20) und
(iii) Berechnen des Partikelkonzentrations-Schätzwerts (P) in Abhängigkeit vom Geräuschkennwert (G).

4. Infektionsschutz-Empfehlungsgeber (12) nach einem der vorstehenden Ansprüche, **dadurch gekennzeichnet, dass** der Geräuschkennwert (G)
(i) einen Schalldruckpegel (L_{P}),
(ii) eine zeitliche Frequenz von Husten- oder Niesereignissen,
(iii) ein Geräuschspektrum der Raumgeräusche (20) und/oder
(iv) eine Personenzahl (A), die aus einer Sprachanalyse der Raumgeräusche (20) abgeleitet ist, umfasst.

5. Infektionsschutz-Empfehlungsgeber (12) nach einem der vorstehenden Ansprüche, **dadurch gekennzeichnet, dass** der Luftqualitätssensor (14)
(a) ein CO2-Sensorelement (16.1) zum Messen einer CO2-Konzentration (c_{CO2}) aufweist und
die Auswerteeinheit (18) ausgebildet ist zum Berechnen des Partikelkonzentrations-Schätzwerts (P) in Abhängigkeit von der CO2-Konzentration (c_{CO2}) und/oder
(b) einen Partikelsensor (16.3) zum Messen einer Partikelkonzentration (c_{P}) und/oder einer Partikelgrößenverteilung aufweist und
die Auswerteeinheit (18) ausgebildet ist zum Berechnen des Partikelkonzentrations-Schätzwerts (P) in Abhängigkeit von der Partikelkonzentration (c_{P}) und/oder der Partikelgrößenverteilung und/oder
(c) ein VOC-Sensorelement (16.7), insbesondere ein lonenmobilitätsspektrometer oder Massenspektrometer, zum Messen einer Markersubstanz-Konzentration einer vorgegebenen Markersubstanz aufweist und
die Auswerteeinheit (18) ausgebildet ist zum Berechnen des Partikelkonzentrations-Schätzwerts (P) in Abhängigkeit von der Markersubstanz-Konzentration,
(d) ein Radon-Sensorelement (16.4) zum Messen einer Radonkonzentration (c_{R}) aufweist und
die Auswerteeinheit (18) ausgebildet ist zum Berechnen des Partikelkonzentrations-Schätzwerts (P) in Abhängigkeit von der Radonkonzentration (c_{R}) und/oder
(e) ein Feuchte-Sensorelement (16.5) zum Messen einer relativen Luftfeuchte aufweist und
die Auswerteeinheit (18) ausgebildet ist zum Berechnen des Partikelkonzentrations-Schätzwerts (P) in Abhängigkeit von der Luftfeuchte.

6. Infektionsschutz-Empfehlungsgeber (12) nach einem der vorstehenden Ansprüche, **dadurch gekennzeichnet, dass** der Luftqualitätssensor (14) ein Aktivitäts-Sensorelement zum Messen einer Leistung, die an einem Fitnessgerät von einem Benutzer abgegeben wird, aufweist und
die Auswerteeinheit (18) ausgebildet ist zum Berechnen des Partikelkonzentrations-Schätzwerts (P) in Abhängigkeit von der Leistung.

7. Infektionsschutz-Empfehlungsgeber (12) nach einem der vorstehenden Ansprüche, **gekennzeichnet durch**
(a) eine Kamera (16.6),
(b) wobei die Auswerteeinheit (18) mit der Kamera (16.6) verbunden ist und ausgebildet ist zum
automatischen Erfassen einer Personenanzahl (A) an Personen (36) im Raum mittels Bilderkennung und
Berechnen des Partikelkonzentrations-Schätzwerts (P) in Abhängigkeit von der Personenanzahl (A).

8. Luftqualitäts-Sicherungsanlage (10) mit
(a) zumindest einem Infektionsschutz-Empfehlungsgeber (12) nach einem der vorstehenden Ansprüche,
(b) zumindest einem Lüftungsaktor (38), mittels dem eine Luftzufuhr, insbesondere eine Frischluftzufuhr, zum Raum vergrößerbar ist,
(c) wobei die Auswerteeinheit (18) ausgebildet ist zum automatischen Betätigen des Lüftungsaktors (38), wenn der Partikelkonzentrations-Schwellenwert (P_{Schwelle}) überschritten wird.

9. Luftqualitäts-Sicherungsanlage mit
(a) einer Mehrzahl an Infektionsschutz-Empfehlungsgebern (12) nach einem der vorstehenden Ansprüche, die jeweils eine Kommunikationseinheit haben,
(b) einem Zentralrechner (26), der ausgebildet ist zum automatischen
- Erfassen von Messdaten von den Infektionsschutz-Empfehlungsgebern (12),
- Berechnen, insbesondere mittels künstlicher Intelligenz, einer Funktion, die den erfassten Kennwerten den Partikelkonzentrations-Schätzwert zuordnet.

10. Luftqualitäts-Sicherungsanlage nach Anspruch 9, **dadurch gekennzeichnet, dass** der Zentralrechner (26) ausgebildet ist zum automatischen
(a) Erfassen von Krankheits- oder Leistungsdaten von Personen, die sich in einem mit einem Infektionsschutz-Empfehlungsgeber (12) ausgestatteten Raum befunden haben und
(b) Berechnen der Funktion anhand der Krankheits- oder Leistungsdaten.

11. Verfahren zum Betreiben eines Infektionsschutz-Empfehlungsgebers (12) nach einem der vorstehenden Ansprüche, mit den Schritten:
(i) Erfassen eines Luftqualitätskennwerts (L), insbesondere einer CO₂-Konzentration, von einem Luftqualitätssensor (14) des Infektionsschutz-Empfehlungsgebers (12),
(ii) Bestimmen eines zeitabhängigen Geräuschpegelwerts (G) von einem Mikrofon (16.2) des Infektionsschutz-Empfehlungsgebers (12),
(iii) Berechnen eines Partikelkonzentrations-Schätzwerts (P), der eine Partikelkonzentration (c_{P}) von Partikeln beschreibt, die von im Raum befindlichen Personen ausgeatmet wurden, und
(iv) Ausgeben eines Signals, das
einen Lüft-Zeitpunkt (T_{warn}), zu dem der Partikelkonzentrations-Schätzwert (P) einen vorgegebenen Partikelkonzentrations-Schwellenwert (P_{Schwelle}) erreicht.

12. Verfahren zum Betreiben eines Infektionsschutz-Empfehlungsgebers (12) nach Anspruch 11, **gekennzeichnet durch** den Schritt: Ausgeben eines Signals, das den Partikelkonzentrations-Schätzwert (P) kodiert.
